# EUROPEAN PATENT APPLICATION

(11) **EP 1 574 382 A2**
(43) Date of publication of application: **14.09.2005**
(21) Application number: 05004762.0
(22) Date of filing: 04.03.2005
(51) Int. Cl.: B60K 17/04

(54) **Vehicle suspension**

(30) Priority: 10.03.2004 GB 0405329
(71) Applicant: Agco SA, 60026 Beauvais (FR)
(72) Inventor: Rateau, Andre, 60408 Francastel (FR)
(74) Representative: Morrall, Roger

(57) **Abstract**

A vehicle suspension for suspending a driven wheel in which an input member (11) arranged to extend generally transverse relative to the associated vehicle and rotate about a first axis (X) drives an output member (12) which rotates about a second axis (Y) generally parallel to the first axis but spaced (Z) therefrom longitudinally relative to the associated vehicle via a system of orbiting links (21). The output member is supported (17,18) for limited pivoting about the input member and spring means (25) are provided to resist this pivoting and thus provide a shock absorbing capability for the suspension. The spring means may be a fluid pressure spring and driver operated control means may be provided for controlling the pressure level in the spring to vary the stiffness of the spring for different operating conditions of the vehicle.

## Description

This invention relates to vehicle suspensions for suspending a driven wheel or other output member and in particular, although not exclusively, to such suspensions for use on tractors.

There is a requirement to provide a suspension for a driven wheel of a tractor particularly when the tractor is driven on the road at ever increasing speeds. Such suspensions need to be robust and, when applied to the rear wheels of a tractor, need to be readily adapted to the existing rear axle casing of the tractor to reduce the introduction costs of the suspension etc.

It is an object of the present invention to provide a suspension for a driven wheel which is suitable for use in a tractor.

Thus according to the present invention there is provided a vehicle suspension for suspending a driven wheel or other output member, the suspension comprising an input member arranged to extend generally transverse relative to the associated vehicle and rotate about a first axis, an output member with which the wheel rotates, the output member rotating about a second axis generally parallel to the first axis but spaced therefrom longitudinally relative to the associated vehicle, support means mounting the output member for limited pivoting about the input member, drive means connecting the input and output members for the transmission of torque therebetween whilst allowing said limited pivoting, and spring means to resist said pivoting and thus provide a shock absorbing capability for the suspension.

Preferably the drive means connecting the input and output members may comprise a system of orbiting links which connect a component which rotates with the input member with a component which rotates with the output member, these links extending generally perpendicular to the axes of rotation and executing and orbiting motion as the input shaft drives the output shaft.

In a preferred arrangement the spring means may comprise a fluid pressure spring (e.g. an air or hydraulic cylinder) the pressure of which may be variable to allow the spring rate of the suspension to be adjusted for different operating conditions of the vehicle.

When used on a tractor it is desirable to be able to lock-out the suspension for field work but leave the suspension active for road work. The damping characteristics of the suspension may be controlled by the vehicle driver using controls located in the cab. The driver may be able to select a lock-out or solid state condition for the suspension or an active condition for the suspension in which he may be able to the adjust the spring rate of the suspension.

If the spring means is a fluid pressure cylinder then the compliance and stiffness may be controlled by controlling the pressure of the fluid in the cylinder.

In an alternative arrangement the spring means may be a coil spring. This would give a fixed rate and would require some mechanical lock in order to lock-out the compliance for field work.

When applied to a tractor as a rear wheel suspension, the input member may be supported in the so-called transversely extending trumpet housing of the back axle with the support member surrounding part of the trumpet housing and supported for limited pivoting thereon by bearings which surround the housing. A hydraulic cylinder may be arranged to act between the trumpet housing and the encircling support member to provide the spring function of the suspension.

Alternatively, the drive means may comprise a chain of gears including an input gear which rotates with the input member, an output gear which rotates with the output member, and one or more intermediate gears meshing with the input and output gears, the output and intermediate gears being mounted on the support means to allow the limited pivoting.

The present invention will now be described, by way of example only, with reference to the accompanying drawings in which:
- Fig. 1: is a horizontal section through a tractor rear wheel suspension in accordance with the present invention;
- Fig. 2: is a section along the line 2 - 2 of Figure 1;
- Fig. 3: is a section on the line 3 - 3 of Figure 2;
- Fig. 4: is a view in the direction of the arrow A with the wheel mounting cover removed;
- Fig. 5: is an exploded view of the suspension of Figures 1 to 4, and
- Fig. 6a, 6b and 6c: are diagrammatic views of alternative drive means between the input and output shafts which is of meshing gear type.

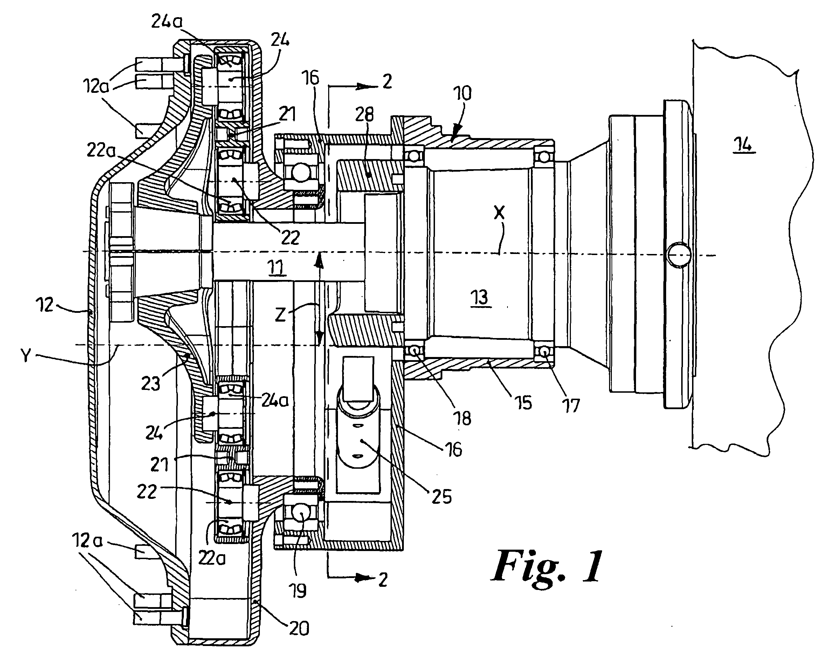

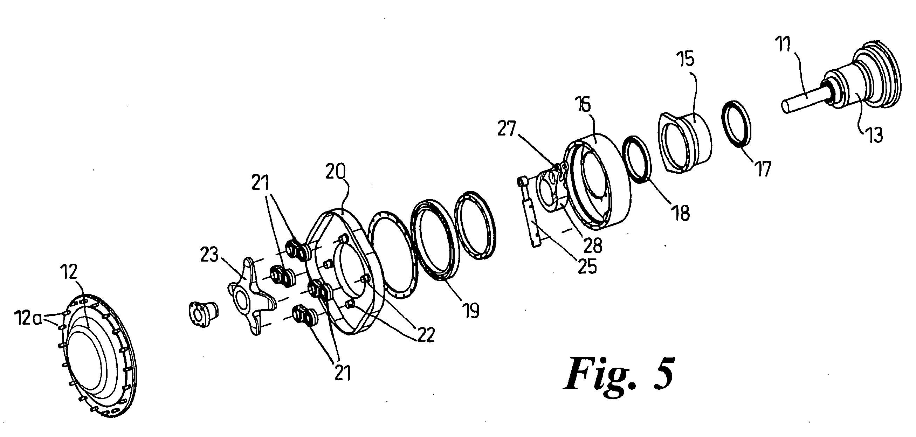

Referring to Figures 1 to 5 the suspension 10 comprises an input member in the form of a shaft 11 which rotates about and axis X and an output member in the form of a wheel mounting cover 12 with wheel mounting studs 12 which rotates about an axis Y. Axis Y being displaced longitudinally relative to the vehicle by the distance Z from the axis X.

The input shaft 11 is supported in the conventional back axle trumpet housing 13 which is secured to the main chassis 14 of the tractor.

The wheel mounting cover 12 is supported relative to the input shaft 11 on a two part support member 15, 16 via bearings 17 and 18 which encircle the trumpet housing. The wheel support cover 12 is mounted in the support member 15, 16 by a large bearing 19. The wheel supporting cover 12 is mounted on a dish like casing 20 which rotates with wheel support cover about the axis Y.

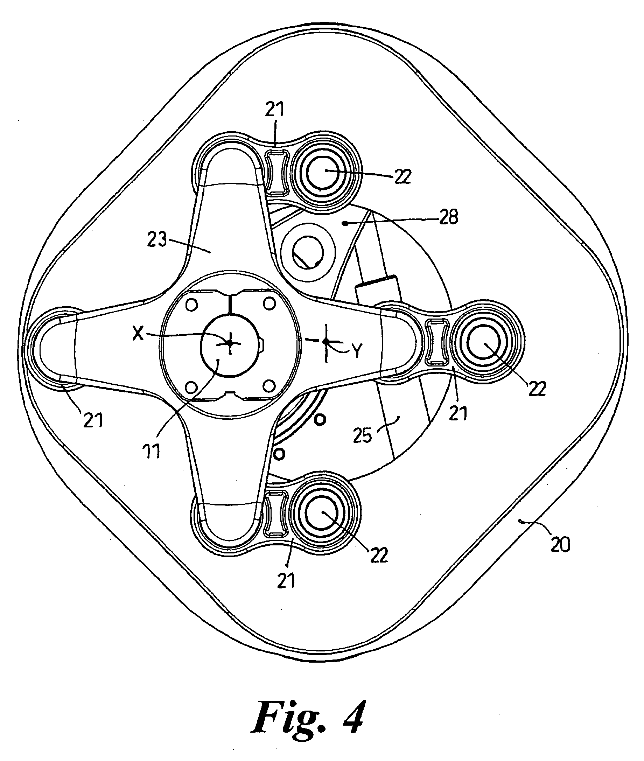

Drive is transmitted between input shaft 11 and the wheel cover 12 and casing 20 by four links 21 (best seen in Fig. 4) which are pivoted on casing 20 by pins 22 and on a spider member 23 attached to shaft 11 by pins 24.

Thus, as spider member 23 is rotated about axis X by shaft 11, the casing 20 and associated wheel mounting cover 12 are drawn around by links 21 to rotate about axis Y. As will be appreciated, to reduce friction, the pins 22 and 24 are surrounded by associated roller bearings 22a and 24a respectively. Thus far the drive transmission from input shaft 11 to displaced wheel rotation axis Y has been described.

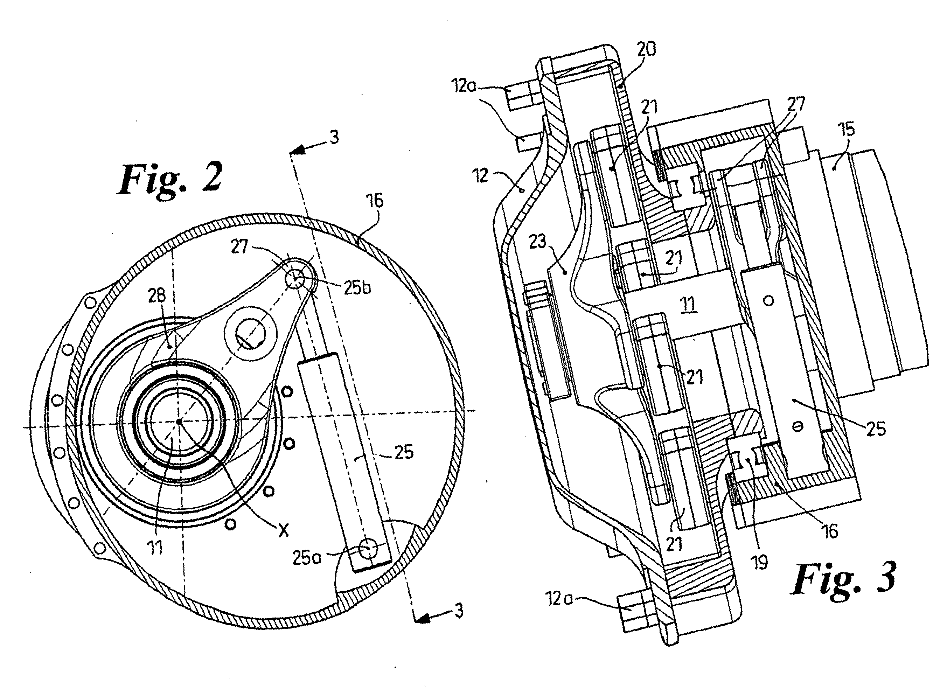

The compliance of the suspension is provided by the pivoting of support member 15, 16 around the trumpet housing 13 under the control of a hydraulic ram 25 which is connected at one end to support member 16 by a pin 25a and at the other end by a pin 25b to forks 27 provided on a member 28 which is non-rotatably secured to trumpet housing 13. As can be appreciated from Fig. 2, the support member 15, 16 is able to make limited pivoting movements about axis X under the control of the hydraulic pressure present in cylinder 25 which acts as a suspension spring. As support 15, 16 pivots about axis X so does the wheel support axis Y and the cover 12.

The suspension may be provided with driver-operated controls which allow the pressure within cylinder 25 to be varied thus allowing the spring rate of the suspension to be changed according to the operating conditions of the vehicle. For example, the vehicle driver may be able to lock the suspension by rendering the cylinder 25 effectively solid. This is a suspension condition which is necessary when undertaking certain tractor field operations such as ploughing etc. When the vehicle is being used on the road, particularly at higher speeds, a more compliant suspension is required to absorb road bumps etc and the operator may then be able to switch the suspension to a condition in which the cylinder 25 provides a shock absorbing capability. The driver may be able to select the level of stiffness of the suspension or he may be provided with a simple on/off control for the suspension.

Clearly the fluid used in the cylinder 25 could also be air with an appropriate air pressure control system operable by the driver.

It also envisaged that the cylinder 25 could be replaced by a coil spring arrangement. This would provide a single spring rate for the suspension when the suspension was operative and some mechanical locking arrangement would be necessary to lock the support member 15, 16 relative to the trumpet housing 13 when operating the vehicle in field conditions.

Each support member 15,16 may also be provided with a second hydraulic ram (not shown) connected between members 28 and 15,16, These second hydraulic rams are hydraulically connected at one end into the pressure line which supplies the lift pressure to an implement hitch fitted to the tractor. Thus as the pressure in the lift cylinders of the implements hitch increases, indicating a higher lift load, the pressure in these second hydraulic rams also increases thus increasing the stiffness of the suspension and maintaining the suspension height of the tractor.

In the arrangement shown in Figures 1 to 5 the final reduction gearing is positioned adjacent the main chassis 14 in the input side of the suspension 10. It will be appreciated that this order can be reversed with the suspension 10 located adjacent the main chassis 14 and the final reduction gearing on the output side (wheel side) of the suspension.

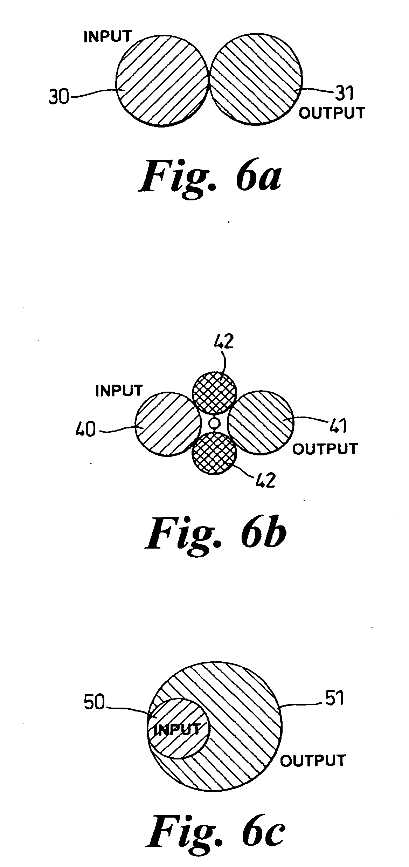

As will be appreciated, the orbiting link arrangement shown in Figures 1 to 5 could be replaced by a gear arrangement as shown diagrammatically in Figs. 6a to 6c.

In Figure 6a the input shaft 11 has a gear 30 connected therewith and wheel mounting cover 12 has a gear 31 connected therewith which meshes with gear 30. The disadvantage of the solution is that the diameter of gears 30 and 31 needs to be relative large due to the torque which ahs to be transmitted so that the distance between the axis of shaft 11 and wheel mounting cover 12 can not be as small as in the orbiting link arrangement of Figures 1 to 5.

Figure 6b shows an alternative arrangement in which input shaft 11 is connected with a gear 40 and wheel mounting cover 12 is connected with a gear 41 and these gears are interconnected by intermediate gears 42. This solution reduces the loading on the gear teeth but again means that the axis of shaft 11 and wheel mounting cover 12 can not be as small as in the link arrangements of Figures 1 to 5.

In Figure 6c input shaft 11 is connected with a gear 50 which meshes with an internally toothed ring gear 51 which is connected with wheel mounting cover 12, Whilst this arrangement enables the axis of shaft 11 and cover 12 to be closer together the gears have to be large due to the torque which is to be transmitted.

Also although the suspension has been described above in relation to the rear wheels of a tractor it could be used on the front wheels of, for example, an articulated tractor.

The present invention thus provides a robust and relatively compact form of vehicle suspension for a driven wheel which is particularly suitable for use a rear suspension on a tractor. It also enables easy adjustments of the spring rate of the suspension by the vehicle driver using cab mounted controls.

## Claims

1. A vehicle suspension for suspending a driven wheel or other output member, the suspension comprising an input member (11) arranged to extend generally transverse relative to the associated vehicle and rotate about a first axis (X), an output member (12) with which the wheel rotates, the output member rotating about a second axis (Y) generally parallel to the first axis but spaced (Z) therefrom longitudinally relative to the associated vehicle, support means (15,16) mounting the output member for limited pivoting about the input member, drive means (21) connecting the input and output members for the transmission of torque therebetween whilst allowing said limited pivoting, and spring means (25) to resist said pivoting and thus provide a shock absorbing capability for the suspension, the suspension being **characterised in that** the drive means comprises a system of orbiting links (21) which extend generally perpendicular to the axes of rotation (X,Y) and executing an orbiting motion as the input member (11) drives the output member (12).

2. A suspension according to claim 1 in which the links (21) are each pivotally mounted (24) at one end on a spider (23) driven by the input member (11) and at the other end (22) on a component (20) which rotates with the output member (12).

3. A suspension according to claims 1 or 2 applied to a tractor as a rear wheel suspension, the input member (11) being supported on a so-called transversely extending trumpet housing (13) of the back axle with the support member (15,16) surrounding part of the trumpet housing and supported for limited pivoting thereon by bearings (17,18) which surround the trumpet housing.

4. A suspension according to Claim 3 in which the spring means acts (25) between the trumpet housing (13) and the encircling support member (15,16)

5. A suspension according to any one of claim 1 to 4 in which the spring means comprises a fluid pressure spring (25).

6. A suspension according to claim 5 having a driver operated control means for controlling the pressure level in the spring (25) to vary the stiffness of the spring for different operating conditions of the vehicle.

7. A suspension according to Claim 6 in which the pressure level can be set by the control means to render the suspension solid.

8. A suspension according to any one of claims 1 to 4 in which the spring means is a metal spring.

9. A suspension according to Claim 8 having a mechanical lock to lock the suspension solid.

10. A suspension according to any one of claims 5 to 7 in which a second fluid pressure spring is provided, the second fluid pressure spring being hydraulically connected with a lift ram of an implement hitch fitted to the vehicle so that as the pressure in the lift ram increases due to a higher implement load, the pressure in the second fluid pressure spring also increases thus increasing the stiffness of the suspension and maintaining the suspension height.
